# EUROPEAN PATENT SPECIFICATION

(11) **EP 3 227 767 B1**
(45) Date of publication and mention of the grant of the patent: **17.06.2020**
(21) Application number: 14907347.0
(22) Date of filing: 03.12.2014
(51) Int. Cl.: G06F 3/0482, G05B 23/02

(54) **HIERARCHICAL NAVIGATION APPARATUS AND METHOD**
HIERARCHISCHE NAVIGATIONSVORRICHTUNG UND -VERFAHREN
APPAREIL ET PROCÉDÉ DE NAVIGATION HIÉRARCHIQUE

(43) Date of publication of application: 11.10.2017
(73) Proprietor: GE Intelligent Platforms, Inc., Charlottesville, VA 22911 (US)
(72) Inventor: BLAIR, Jason, Berlin, CT 06037 (US); KENNY, Joseph, John, Foxboro, MA 02035-2879 (US)
(74) Representative: Aronova
(86) International application number: PCT/US2014/068315
(87) International publication number: WO 2016/089386

(56) References cited:
- WO-A1-2014/151574
- US-A1- 2003 160 815
- US-A1- 2004 088 678
- US-A1- 2007 240 071

## Description

### BACKGROUND OF THE INVENTION

### FIELD OF THE INVENTION

The subject matter disclosed herein generally relates to a multi-purpose organization and data processing environment.

### BRIEF DESCRIPTION OF THE RELATED ART

A variety of approaches have been used in the visualization of data having a hierarchal relationship, including the use of tree structures containing any number of folders and subfolders on computing devices. Typically, these tree structures do little more than identify any number of locations which may in turn lead to an operational data structure. In mobile computing devices, these hierarchies are traditionally displayed as a single pane that is representative of the current hierarchal level.

These hierarchal structures may have a large number of sublevels, thus it may become difficult to quickly and accurately identify a present operational level. In these situations, it may be time consuming to "back out" of the hierarchy to determine the present location. Particularly, in mobile computing devices where only one hierarchal level is shown at a time, determining the current operational level of the hierarchy may not be possible due to limitations on display sizes. As such, typical structures load sublevels or "children" only as needed. This may be beneficial for hierarchies having many branches or nodes, but creates visual challenges when the branches themselves have many sublevels, and so on. Additionally, large hierarchical structures oftentimes consume a substantial amount of computer memory and thus may negatively impact network communications required to navigate the structure. Previous approaches have difficulty when trying to determine how to display a large list of results while maintaining a visualization for previous nodes.

Further, these hierarchies are oftentimes linked to the operational data structure to allow a user to perform a number of tasks. When performing these tasks, it may become necessary to retrieve information contained within the hierarchal structure while maintaining the ability to access and modify elements of the task. Because of the aforementioned limitations of the hierarchies, these systems would not allow for this.

In the present technological environment, users require data quickly that has a recognizable meaning. Because hierarchies may contain any number of trees or other elements, it is oftentimes difficult for users to view individual layers of the hierarchy quickly and with clarity.

The above-mentioned problems have resulted in some user dissatisfaction with previous approaches.

WO 2014/151574 relates to a system for navigating within a graphical depiction of a process control plant.

### BRIEF DESCRIPTION OF THE INVENTION

The approaches described herein provide users with a way to view and organize content by providing a classic hierarchical visualization structure in various computing environments, for example desktop and mobile environments. The approaches may be applied to any data structure that is hierarchical in nature (e.g., asset models, favorites, to mention two examples), and may organize and present thousands of elements. By providing contextual information at any desired level of the hierarchy, the navigation guides users to critical information within potentially large hierarchies. Critical data points within the navigation may be provided at each node level. The approaches described herein streamline the path of data and work flow through the system and may provide desired information without having to change context or navigate elsewhere in the system. In some approaches, the user may rearrange the navigation hierarchy based on the provided content (e.g., alarm severity or the number of alarms), further enhancing the context-sensitive nature of the navigation.

Advantageously, due to similarities between existing traditional hierarchical visualizations and the approaches described herein, users who are experienced in the traditional hierarchical visualizations may quickly adjust without requiring significant training.

In some approaches, a display apparatus is provided having an interface with an input and an output and a processor coupled to the interface. The output is configured to display a first panel at a variable panel display portion of a display. The first panel includes one or more first selectable nodes associated with an industrial control system and information associated with the industrial control system.

Upon the input receiving a selection of one or more of the selectable nodes, the processor is configured to access a server and present a panel associated with the selected node at the variable panel display portion. This panel includes one or more second selectable nodes and information associated with the selected node. The processor is further configured to adjust the size of the variable panel display portion displayed at the output to accommodate a number of panels and to allow navigation between the panels that is independent of information displayed at a working portion of the display. In some examples, the processor is further configured to present the first panel and the panel associated with the selected node adjacent to each other on the variable display portion via the output.

In many of these examples, the display apparatus may further include any number of additional panels which are configured to display the selected node and information associated therewith. The processor may be configured to determine the size of the variable panel display portion corresponding to a maximum number of displayable panels in the variable panel display portion and compare the determined size to the number of presented panels and thereafter display the maximum number of displayable panels in the variable panel display portion.

In some forms, the information associated with the industrial control system may include control system alarm state data and control system operating data. The display apparatus may further include a server configured to periodically receive and store information relating to the identification of the nodes as well as the operation of the industrial control system and the nodes. The server may also be configured to send the information relating to the identification of the nodes and operation of the industrial control system and the nodes to the input of the interface.

In additional examples, approaches for hierarchical navigation are provided. A first panel is provided at a variable panel display portion of a display. The first panel has one or more first selectable nodes associated with an industrial control system and information associated with the industrial control system. Next, a selection is made of the one or more selectable nodes in the first panel on the display. A panel is then presented which is associated with the selected node at the variable panel display portion. The size of the variable panel display portion may then be adjusted to accommodate a number of panels. A data server is accessed, and the data server is configured to store the information associated with the industrial control system and the selectable nodes.

In some forms, the present approaches may further include presenting the first panel and the panel associated with the selected node adjacent to each other on the variable panel display portion. Additionally, a selection may be made of one of the second selectable nodes and present a panel associated with the second selectable node at the variable panel input display portion. This panel may include one or more third selectable nodes and information associated with the second selectable node.

In other approaches, the first panel, the panel associated with the selected node, and the panel associated with the second selectable node may be presented adjacent to each other on the variable panel display portion. Additional panels associated with additional selectable nodes may also be presented.

In many of these approaches, a size of the variable panel display portion that corresponds to a maximum number of displayable panels may be determined. Next the determined size may be compared to the number of presented panels, and the maximum number of displayable panels in the variable panel display portion may be displayed. When the number of presented panels is greater than the maximum number of displayable panels, the method may then indicate that additional panels are hidden and may be displayed. The approaches may also provide for an indication of which panels are currently being displayed in the variable panel display portion.

So configured, the approaches described herein may be incorporated in displays and devices having varying sizes and configurations. As such, a user may quickly identify the current location within a hierarchical structure and may also freely navigate between levels. The user may also access contextual information regarding elements at the different levels and navigate the hierarchical structure while retaining content contained in a working portion. Further, the approaches described herein allow for the application of paging to be used with the hierarchal structure, thereby reducing the quantity of data being transferred at a given time. By incorporating paging, the display apparatus may quickly load information to be presented at the panels.

### BRIEF DESCRIPTION OF THE DRAWINGS

For a more complete understanding of the disclosure, reference should be made to the following detailed description and accompanying drawings wherein:
FIG. 1 comprises a block diagram illustrating an exemplary hierarchical navigation apparatus according to various embodiments of the present invention;
FIG. 2 comprises an illustration of a display showing the exemplary hierarchical navigation apparatus of FIG. 1 according to various embodiments of the present invention;
FIG. 3 comprises an illustration of a display showing the exemplary hierarchical navigation apparatus of FIGS. 1-2 according to various embodiments of the present invention;
FIG. 4 comprises an illustration of a display showing the exemplary hierarchical navigation apparatus of FIGS. 1-3 according to various embodiments of the present invention;
FIG. 5 comprises an illustration of a display showing the exemplary hierarchical navigation apparatus of FIGS. 1-4 according to various embodiments of the present invention; and
FIG. 6 comprises a flow chart illustrating an approach for hierarchical navigation according to various embodiments of the present invention.

Skilled artisans will appreciate that elements in the figures are illustrated for simplicity and clarity. It will further be appreciated that certain actions and/or steps may be described or depicted in a particular order of occurrence while those skilled in the art will understand that such specificity with respect to sequence is not actually required. It will also be understood that the terms and expressions used herein have the ordinary meaning as is accorded to such terms and expressions with respect to their corresponding respective areas of inquiry and study except where specific meanings have otherwise been set forth herein.

### DETAILED DESCRIPTION OF THE INVENTION

Approaches are provided that allow for efficiently visualizing hierarchical data structures across a number of different devices having displays. In one aspect, the approaches allow for the resizing of the hierarchical structure to accommodate displays having a number of different configurations. The hierarchical structure may also be navigated while a working portion of the display maintains the content contained therein. The hierarchical structure may provide an indication for the current visible panels and may be navigable to allow the display of alternative panels. The hierarchical structure may also include contextual information (such as, for example, a folder name, title, or other common identifier) beyond identification information. This contextual information may allow a user to navigate the hierarchical structure and obtain desired information without exiting the current working portion of the display.

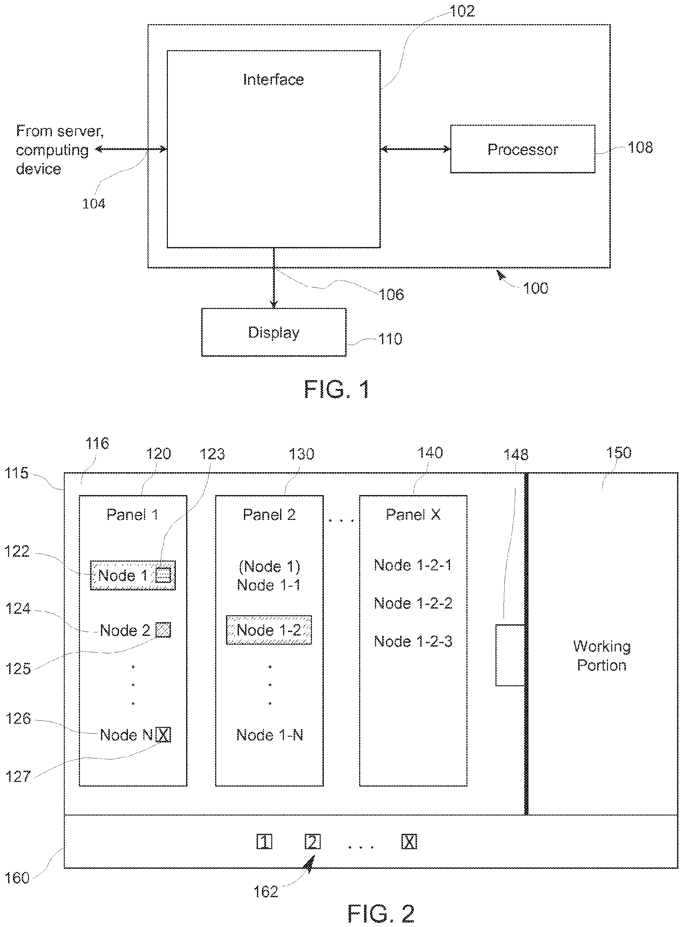

Referring now to FIGS. 1-2, one example of a hierarchical navigation system (or display apparatus) 100 and display 115 are described. The hierarchical navigation system 100 includes an interface 102 having an input 104 and an output 106, a processor 108, and a user display 110. The interface 102 is a computer-based program and/or hardware configured to accept a signal or communications from a computing device such as a personal computer, a mobile computing device, a control system or server at the input 104 and transmit the generated communication at the output 106 to the user display 110, which may also be a computing system. The function of the interface 102 is to allow the processor 108 to communicate with the user system and the computing device. It is understood that in some examples, the computing device coupled to the input 104 may be a separate computing device in communication with the interface 102.

The processor 108 is any combination of hardware devices and/or software selectively chosen to process inputs related to and navigate a hierarchical structure and generate, display, and/or transmit communications regarding the hierarchical structure to be displayed. The processor 108 includes instructions that select and display desired portions of the hierarchical structure.

It will be appreciated that the various components described herein may be implemented using a general purpose processing device executing computer instructions stored in memory. Further, it is understood that the processor 108 may be a standalone component or may be incorporated into the interface 102.

The display 115 may include a variable panel display portion 116, any number of panels 120, 130, 140 arranged hierarchically (that is, the highest level of the structure is provided at one side of the display 115), a variable panel display resizer 148, a working portion 150, a navigation portion 160 and any number of navigation indicators 162. Each panel 120, 130, 140 may include any number of nodes or branches 122, 124, 126 corresponding to the different levels in the hierarchical structure. For example, the nodes 122, 124, 126 of the first panel 120 correspond to sublevels within the first panel 120. The second panel 130 corresponds to the node 122, 124, 126 selected in the first panel 130. Similarly, the additional panel 140 corresponds to the node selected in the preceding panel.

If desired by a user, any number of nodes 122, 124, 126 may also have a contextual indicator 123, 125, 127 appended thereto. This 123, 125, 127 is related to the node and provides a quick visual indication of information pertaining to that node. It is understood that the panel itself may also have contextual data appended thereto that is representative of information relating to the displayed panel. The contextual indicator 123, 125, 127 may represent any aspect of the node, hierarchical level, panel, or control system. For example, the contextual indicator 123, 125, 127 may be representative of the presence of an alarm, the number of current alarm conditions, current operating parameters such as pressures, temperatures, or whether a device is powered or engaged, and the like. Other examples are envisioned and may be implemented depending on the system being visualized.

The variable panel display resizer 148 is used to resize both the variable panel display portion 116 and the working portion 150. The variable panel display resizer 148 may be selected by a user and dragged to a desired location. The variable panel display resizer 148 will be discussed in further detail below.

The working portion 150 may be any portion of the display in which a user may perform tasks, gather information, or complete desired functions. For example, the working portion 150 may include graphical representations or commands relating to a control system. Generally speaking, the contents of the working portion 150 are dependent on an initial selection of the hierarchical structure.

The navigation portion 160 allows a user to navigate between panels in the variable panel display portion 116. The navigation indicators 162 provide a visual indication of the current panels being displayed. Further details of the navigation portion will be discussed below.

In operation, upon selecting a starting point or initial level in the hierarchical structure, the output 106 is configured to display the first panel 120 at the variable panel display portion 116. The first panel 120 has one or more first selectable nodes 122, 124, 126 that are associated with the control system and may also include contextual indicators 123, 125, 127. As an example, the initial selected level may correspond to an enterprise layer of the control system.

A user may then provide the input 104 with a command, for example, selecting a particular node 122, 124, 126 in the first panel 120. The processor 108 is then configured to access a server (not shown) and present a panel 130 that is associated with the previously selected node 122, 124, 126. As an example, this panel may be representative of a particular location of the previously selected enterprise layer of the control system. As described, this panel 130 may also include any number of second selectable nodes, information associated with these second selectable nodes, and/or information associated with the previously selected node being displayed in the panel 130. The processor 108 may present the first panel 120 and the second panel 130, associated with the selected node, adjacent to each other on the variable panel display portion 116 via the output 106.

The processor 108 is also configured to adjust the size of the variable panel display portion being displayed by the output 106 to accommodate any number of panels 120, 130, 140 by selecting or dragging the variable panel display resizer as desired which will be discussed in further detail below.

Based on the selections presented in the panels 120, 130, 140, contents are provided in the working plane. As an example, upon selecting any number of nodes in panels 120, 130, 140, the working plane may display charts, data structures, programs, and the like which may be used during operation of a control system. The processor may further be configured to allow navigation between the panels 120, 130, 140 that is independent of information displayed at the working portion 150.

The user may select any number of additional nodes contained in the panels to further navigate the hierarchical structure. The processor 108 is configured to display these selected nodes in additional panels which may in turn include selectable nodes and information associated therewith. As such, in a hierarchical structure with multiple levels, a number of panels may be displayed in the variable panel display portion 116.

Because the size of the variable panel display portion 116 is limited by the physical size of the display 115 on the user's device as well as the variable panel display resizer 148, a limited number of panels 120, 130, 140 may be displayed at any given time. When additional nodes are selected which result in additional panels opening, the processor 108 is configured to determine the size of the variable panel display portion 116. This size corresponds to a maximum number of displayable panels. For example, the processor 108 may determine that the size of the variable panel display portion 116 may only provide for a maximum of three panels to be displayed at a given time. The processor 108 is further configured to compare the determined size to the number of present panels and display the maximum number of displayable panels in the variable panel display portion 116. In other words, the processor 108 ensures the maximum number of panels are being displayed whenever a node is selected. The processor is configured to make this determination for any display dimensions and thus may maximize available screen real estate.

At any level of the hierarchical structure, contextual indicators 123, 125, 127 may be provided. These indicators provide information relating to the hierarchical structure beyond node titles and/or descriptive names. The indicator may relate to operating conditions of the elements being represented by the hierarchical structure. The contextual indicators 123, 125, 127 may be any shape and size, and may further use their individual orientation to convey contextual information. As an example, a contextual indicator may be provided in the form of a number that represents the number of alarm conditions a component or element has experienced within a given time frame. The contextual indicator 123, 125, 127 may also be color coded or shaped to indicate the severity or rate of a particular event. It is understood that contextual indicators may be used to represent any number of different aspects of the hierarchical structure.

In some examples and particularly in a desktop environment, a user may use a mouse or other selection method to hover over a node to receive additional contextual information or indicators.

As another example, a user may be performing any number of tasks in the working portion 150 and may need to know contextual information for a high-level element in the structure that is several steps removed from the current location therein. Without exiting the working portion 150, the user may navigate the panels to this point in the hierarchical structure and view the contextual information contained in the panel and use the information as necessary.

In some forms, the hierarchical navigation system 100 may also include a server (not shown). This server may be configured to periodically receive and store information relating to the identification of the nodes and operation of the industrial control system and the nodes. The server may further be configured to send the information relating to the identification of the nodes, the operation of the industrial control system, and the operation of the nodes to the input 104 of the interface to be displayed in panels 120, 130, 140.

The server may contain any number of data elements containing identification and contextual information as well as relational information detailing the relationship of nodes in the hierarchical structure. For example, a data element may contain a title or name of a node, contextual information relating to the node, and parent and/or children information describing the data element's position in the hierarchical structure. The contextual information relating to the node may be provided by an external system at any frequency and may be updated independently from the remaining information contained in the data element. Thus, when a user accesses a particular node, the processor 108 may access the data element associated with the selected node and visualize the information contained in the data element.

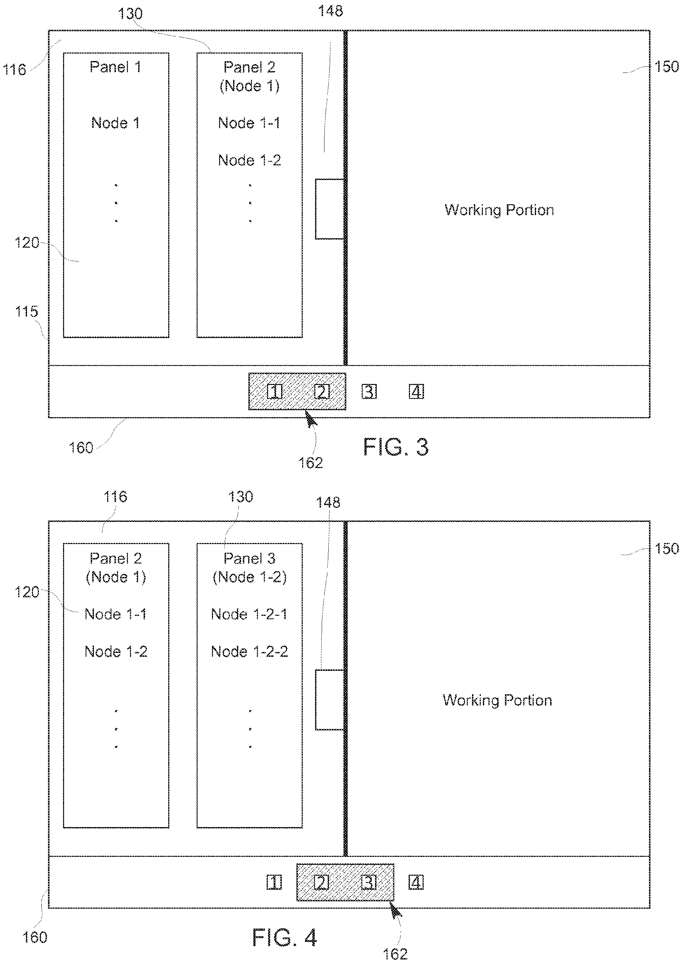

Turning now to FIGS. 3-5, additional features of the display 115 are described. As described, the navigation portion 160 may include any number of navigation indicators 162 which at least partially depend on the number of panels displayed in the variable panel display portion 116 by using the panel display resizer 148. Thus, FIG. 3 illustrates the variable panel display portion 116 being sized to display the first panel 120 and second panel 130, and the navigation indicators 162 bracket the displayed panels by shading, cross hatching, highlighting, or any other alternatives to display variation.

Turning to FIG. 4, the user may wish to view panels representative of a different layer of the hierarchical structure, for instance panels 130 and 140. The user may select the desired panels in the navigation portion 160, and the navigation indicators 162 may indicate different panels have been selected and are visible in the variable panel display portion 116.

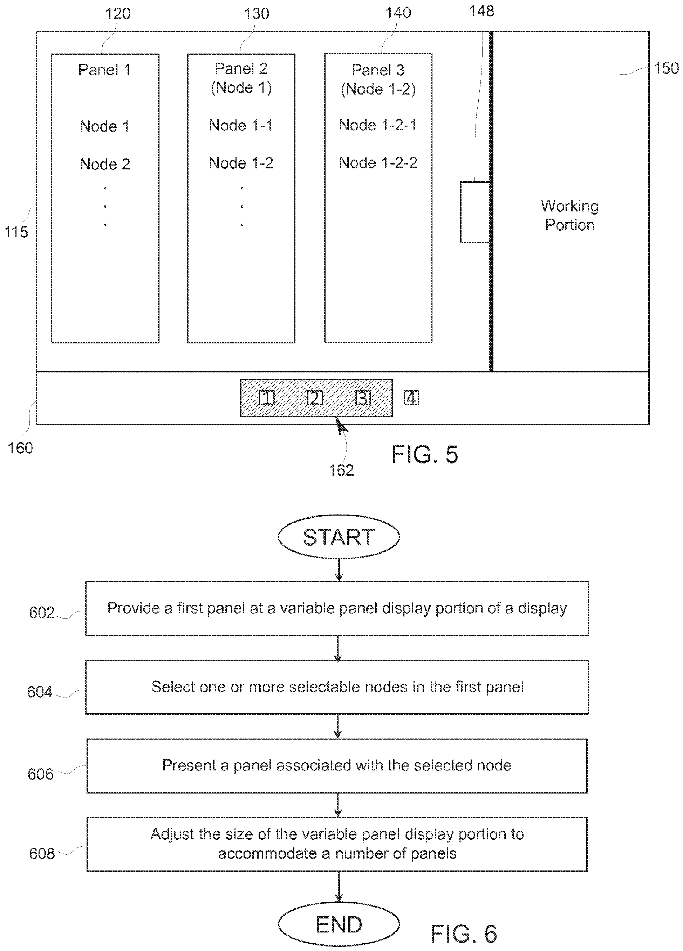

Turning to FIG. 5, the user may resize the variable panel display portion 116 such that three panels are displayed by using the variable panel display resizer 148. Accordingly, the navigation indicators 162 illustrate the three visible panels that are visible at the variable panel display portion 116. It is understood that the navigation portion 160 may include additional indicators such as arrows and the like which the user may select to move between different panels being illustrated by the navigation indicators 162. Additionally, in certain environments, the user may hover their mouse or selector over the navigation indicators 162 to obtain additional information such as the number of total panels in the hierarchical structure and the like.

It is understood that any of the elements of the display 115 may be further resized and or minimized by the user. Further, it is understood that any number of panels 120, 130, 140 may present information in a paged manner. By "paging" and as used herein, it is meant an approach for taking a large or substantial list of items and segmenting them such that in a network perspective, data and/or information may be presented in a quick and efficient manner. By incorporating paging in the display 115, any number of the panels 120, 130, 140 will only transmit a portion of the data across the network, which in turn may reduce data transfer costs and reduce delays due to this data transfer. It will be understood that one example of paging is infinite scrolling, whereby presented information automatically pages subsequent segmented information upon scrolling to the end of the currently presented page.

Turning to FIG. 6, an approach for hierarchical navigation is provided. First, at step 602 a first panel is provided at a variable panel display portion of a display. The first panel has one or more first selectable nodes associated with an industrial control system and information associated with the industrial control system. Next, at step 604, one of the one or more selectable nodes is selected in the first panel on the display. At step 606, a panel is then presented which is associated with the selected node at the variable panel display portion. At step 608, the size of the variable panel display portion is adjusted to accommodate a number of panels. In some examples, the approach may also access a data server configured to store the information associated with the industrial control system and the selectable nodes.

In some forms, the approach may further include presenting the first panel and the panel associated with the selected node adjacent to each other on the variable panel display portion. Additionally, the method may select one of the second selectable nodes and present a panel associated with the second selectable node at the variable panel input display portion. This panel may include one or more third selectable nodes and information associated with the second selectable node.

In other forms, the approach may present the first panel, the panel associated with the selected node, and the panel associated with the second selectable node adjacent to each other on the variable panel display portion. Additional panels associated with additional selectable nodes may also be presented.

In many of these examples, the approaches may also determine a size of the variable panel display portion that corresponds to a maximum number of displayable panels, compare the determined size to the number of presented panels, and display the maximum number of displayable panels in the variable panel display portion. When the number of presented panels is greater than the maximum number of displayable panels, the method may then indicate that additional panels are hidden and may be displayed. The method may also indicate which panels are currently being displayed in the variable panel display portion.

In yet other forms, the approach may also page at least one of the first panel and the panel associated with the selected node. In these forms, a data server is accessed to retrieve additional information associated with the first panel and/or the panel associated with the selected node. As such, information may be segmented such that data being transmitted over a network may be presented quickly and efficiently.

It will be appreciated by those skilled in the art that modifications to the foregoing embodiments may be made in various aspects. Other variations clearly would also work, and are within the scope of the invention. The present invention is set forth with particularity in the appended claims. It is deemed that the scope of that invention encompasses such modifications and alterations to the embodiments herein as would be apparent to one of ordinary skill in the art and familiar with the teachings of the present application.

## Claims

1. A method comprising:
providing a first panel (120) at a variable panel display portion (116) of a display (110), the first panel (120) having one or more first selectable nodes (122, 124, 126) associated with an industrial control system and information associated with the industrial control system;
selecting one of the one or more first selectable nodes (122, 124, 126) in the first panel on the display (110);
presenting a panel (130) associated with the selected node at the variable panel display portion (116), the panel (130) including one or more second selectable nodes and information associated with the selected node;
**characterized in that**
a size of the variable panel display portion (116) may be adjusted (148, 608) to accommodate a number of panels (120, 130), wherein navigation between the number of panels is independent of information displayed at a working portion of the display (110).

2. The method of claim 1, further comprising presenting the first panel (120) and the panel (130) associated with the selected node adjacent to each other on the variable panel display portion (116).

3. The method of claim 2, further comprising the step of selecting one of the second selectable nodes and presenting a panel associated with the selected second selectable node at the variable panel display portion (116), the panel including one or more third selectable nodes and information associated with the selected second selectable node.

4. The method of claim 3, further comprising the step of presenting the first panel (120), the panel (130) associated with the selected first selectable node, and the panel associated with the second selectable node adjacent to each other on the variable panel display portion (116).

5. The method of claim 3, further comprising the step of presenting additional panels (140) associated with additional selectable nodes.

6. The method of claim 5, further comprising the steps of:
determining a size of the variable panel display portion (116), the size of the variable panel display portion (116) corresponding to a maximum number of displayable panels;
comparing the determined size to a number of presented panels; and
displaying the maximum number of displayable panels in the variable panel display portion.

7. The method of claim 6, further comprising the step of when the number of presented panels is greater than the maximum number of displayable panels, indicating (162) that additional panels are hidden and may be displayed.

8. The method of claim 7, further comprising the step of indicating the panels being displayed in the variable panel display portion (116).

9. The method of claim 1, further comprising the step of accessing a data server configured to store the information associated with the industrial control system and the selectable nodes.

10. The method of claim 1, further comprising the step of paging at least one of the first panel (120) and the panel associated with the selected node, wherein a data server is accessed to retrieve additional information associated with the at least one of the first panel and the panel associated with the selected node.

11. A display apparatus comprising:
an interface (102) having an input and an output; and
a processor (108) coupled to the interface;
**characterized in that**
the output is configured to display a first panel (120) at a variable panel display portion (116) of a display (110), the first panel (120) having one or more first selectable nodes (122, 124, 126) associated with an industrial control system and information associated with the industrial control system, wherein upon the input receiving a selection of one or more of the selectable nodes (122, 124, 126), the processor configured to access a server and present a panel (130) associated with the selected node at the variable panel display portion, the panel (130) including one or more second selectable nodes and information associated with the selected node, the processor further configured to adjust a size of the variable panel display portion (116) displayed via the output to accommodate a number of panels, the processor further configured to allow navigation between the panels that is independent of information displayed at a working portion of the display.

12. The display apparatus of claim 11 wherein the processor is further configured to present the first panel (120) and the panel (130) associated with the selected node adjacent to each other on the variable panel display portion (116) via the output.

13. The display apparatus of claim 11, further comprising a plurality of additional panels (140) configured to display the selected node and information associated therewith.

14. The display apparatus of claim 13, wherein the processor (108) is further configured to determine a size of the variable panel display portion (116) corresponding to a maximum number of displayable panels, the processor further being configured to compare the determined size to a number of presented panels and display the maximum number of displayable panels in the variable panel display portion (116).

15. The display apparatus of claim 14, wherein the information associated with the industrial control system comprises at least one of control system alarm state data and control system operating data.

## Patentansprüche

1. Verfahren, umfassend:
Bereitstellen eines ersten Felds (120) an einem variablen Feldanzeigeabschnitt (116) einer Anzeige (110), wobei das erste Feld (120) einen oder mehrere erste auswählbare Knoten (122, 124, 126), die zu einem industriellen Steuerungssystem gehören, und Informationen aufweist, die zu dem industriellen Steuerungssystem gehören;
Auswählen von einem von dem einen oder den mehreren ersten auswählbaren Knoten (122, 124, 126) in dem ersten Feld auf der Anzeige (110);
Darstellen eines Felds (130), das zu dem ausgewählten Knoten gehört, auf dem variablen Feldanzeigeabschnitt (116), wobei das Feld (130) ein oder mehrere zweite auswählbare Knoten und Informationen einschließt, die zu dem ausgewählten Knoten gehören;
**dadurch gekennzeichnet, dass**
eine Größe des variablen Feldanzeigeabschnitts (116) angepasst (148, 608) werden kann, um eine Anzahl von Feldern (120, 130) unterzubringen, wobei die Navigation zwischen der Anzahl der Felder unabhängig von Informationen ist, die auf einem Arbeitsabschnitt der Anzeige (110) angezeigt werden.

2. Verfahren nach Anspruch 1, des Weiteren umfassend Darstellen des ersten Felds (120) und des Felds (130), das zu dem ausgewählten Knoten gehört, nebeneinander auf dem variablen Feldanzeigeabschnitt (116) .

3. Verfahren nach Anspruch 2, des Weiteren umfassend den Schritt des Auswählens von einem von den zweiten auswählbaren Knoten und des Darstellens eines Felds, das zu dem ausgewählten zweiten auswählbaren Knoten gehört, auf dem variablen Feldanzeigeabschnitt (116), wobei das Feld einen oder mehrere dritte auswählbare Knoten und Informationen einschließt, die zu dem ausgewählten zweiten auswählbaren Knoten gehören.

4. Verfahren nach Anspruch 3, des Weiteren umfassend den Schritt des Darstellens des ersten Felds (120), des Felds (130), das zu dem ausgewählten ersten auswählbaren Knoten gehört, und des Felds, das zu dem zweiten auswählbaren Knoten gehört, nebeneinander auf dem variablen Feldanzeigeabschnitt (116) .

5. Verfahren nach Anspruch 3, des Weiteren umfassend den Schritt des Darstellens zusätzlicher Felder (140), die zu zusätzlichen auswählbaren Knoten gehören.

6. Verfahren nach Anspruch 5, des Weiteren umfassend die Schritte:
Bestimmen einer Größe des variablen Feldanzeigeabschnitts (116), wobei die Größe des variablen Feldanzeigeabschnitts (116) einer Maximalanzahl von anzeigbaren Feldern entspricht;
Vergleichen der bestimmten Größe mit einer Anzahl dargestellter Felder; und
Anzeigen der Maximalanzahl der anzeigbaren Felder in dem variablen Feldanzeigeabschnitt.

7. Verfahren nach Anspruch 6, des Weiteren umfassend den Schritt des Angebens (162), dass zusätzliche Felder ausgeblendet sind und angezeigt werden können, wenn die Anzahl der dargestellten Feldern größer als die Maximalanzahl der anzeigbaren Felder ist.

8. Verfahren nach Anspruch 7, des Weiteren umfassend den Schritt des Angebens der Felder, die in dem variablen Feldanzeigeabschnitt (116) angezeigt werden.

9. Verfahren nach Anspruch 1, des Weiteren umfassend den Schritt des Zugreifens auf einen Datenserver, der konfiguriert ist, um die Informationen zu speichern, die zu dem industriellen Steuerungssystem und den auswählbaren Knoten gehören.

10. Verfahren nach Anspruch 1, des Weiteren umfassend den Schritt des Paginierens von mindestens einem von dem ersten Feld (120) und dem Feld, das zu dem auswählbaren Knoten gehört, wobei auf einen Datenserver zugegriffen wird, um zusätzliche Informationen abzurufen, die zu dem mindestens einen von dem ersten Feld und dem Feld gehören, das zu dem ausgewählten Knoten gehört.

11. Anzeigevorrichtung, umfassend:
eine Schnittstelle (102) mit einem Eingang und einem Ausgang; und
einen Prozessor (108), der an die Schnittstelle gekoppelt ist;
**dadurch gekennzeichnet, dass**
die Ausgabe konfiguriert ist, um ein erstes Feld (120) auf einem variablen Feldanzeigeabschnitt (116) einer Anzeige (110) anzuzeigen, wobei das erste Feld (120) einen oder mehrere erste auswählbare Knoten (122, 124, 126), die zu einem industriellen Steuerungssystem gehören, und Informationen aufweist, die zu dem industriellen Steuerungssystem gehören, wobei der Prozessor konfiguriert ist, wenn der Eingang eine Auswahl von einem oder mehreren der auswählbaren Knoten (122, 124, 126) empfängt, auf einen Server zuzugreifen und ein Feld (130), das zu dem ausgewählten Knoten gehört, auf dem variablen Feldanzeigeabschnitt darzustellen, wobei das Feld (130) einen oder mehrere zweite auswählbare Knoten und Informationen einschließt, die zu dem ausgewählten Knoten gehören, wobei der Prozessor des Weiteren konfiguriert ist, um eine Größe des variablen Feldanzeigeabschnitts (116) anzupassen, der mittels der Ausgabe angezeigt wird, um eine Anzahl von Feldern unterzubringen, wobei der Prozessor des Weiteren konfiguriert ist, um Navigation zwischen den Feldern zuzulassen, die unabhängig von den Informationen ist, die auf einem Arbeitsabschnitt der Anzeige angezeigt werden.

12. Anzeigevorrichtung nach Anspruch 11, wobei der Prozessor des Weiteren konfiguriert ist, um das erste Feld (120) und das Feld (130), das zu dem ausgewählten Knoten gehört, mittels der Ausgabe nebeneinander auf dem variablen Feldanzeigeabschnitt (116) darzustellen.

13. Anzeigevorrichtung nach Anspruch 11, des Weiteren umfassend eine Vielzahl von zusätzlichen Feldern (140), die konfiguriert sind, um den ausgewählten Knoten und zugehörige Informationen anzuzeigen.

14. Anzeigevorrichtung nach Anspruch 13, wobei der Prozessor (108) des Weiteren konfiguriert ist, um eine Größe des variablen Feldanzeigeabschnitts (116) zu bestimmen, die einer Maximalanzahl anzeigbarer Felder entspricht, wobei der Prozessor des Weiteren konfiguriert ist, um die bestimmte Größe mit einer Anzahl dargestellter Felder zu vergleichen und die Maximalanzahl der anzeigbaren Felder in dem variablen Feldanzeigeabschnitt (116) anzuzeigen.

15. Anzeigevorrichtung nach Anspruch 14, wobei die Informationen, die zu dem industriellen Steuerungssystem gehören, mindestens eines von Alarmzustandsdaten des Steuerungssystems und Betriebsdaten des Steuerungssystems umfassen.

## Revendications

1. Procédé comprenant :
la fourniture d'un premier panneau (120) au niveau d'une partie d'affichage de panneau variable (116) d'un affichage (110), le premier panneau (120) ayant un ou plusieurs premiers nœuds sélectionnables (122, 124, 126) associés à un système de commande industriel et des informations associées au système de commande industriel ;
la sélection d'un ou de plusieurs premiers nœuds sélectionnables (122, 124, 126) dans le premier panneau sur l'affichage (110) ;
la présentation d'un panneau (130) associé au nœud sélectionné au niveau de la partie d'affichage de panneau variable (116), le panneau (130) comprenant un ou plusieurs deuxièmes nœuds sélectionnables et des informations associées au nœud sélectionné ;
**caractérisé en ce que**
une taille de la partie d'affichage de panneau variable (116) peut être ajustée (148, 608) pour s'adapter à un certain nombre de panneaux (120, 130), la navigation entre le nombre de panneaux étant indépendante des informations affichées au niveau d'une partie de travail de l'affichage (110).

2. Procédé selon la revendication 1, comprenant en outre la présentation du premier panneau (120) et du panneau (130) associé au nœud sélectionné, adjacents l'un à l'autre, sur la partie d'affichage de panneau variable (116).

3. Procédé selon la revendication 2, comprenant en outre l'étape de sélection de l'un des deuxièmes nœuds sélectionnables et de présentation d'un panneau associé au deuxième nœud sélectionnable sélectionné au niveau de la partie d'affichage de panneau variable (116), le panneau comprenant un ou plusieurs troisièmes nœuds sélectionnables et des informations associées au deuxième nœud sélectionnable sélectionné.

4. Procédé selon la revendication 3, comprenant en outre l'étape de présentation du premier panneau (120), du panneau (130) associé au premier nœud sélectionnable sélectionné, et du panneau associé au deuxième nœud sélectionnable adjacents l'un à l'autre sur la partie d'affichage de panneau variable (116).

5. Procédé selon la revendication 3, comprenant en outre l'étape de présentation de panneaux supplémentaires (140) associés à des nœuds sélectionnables supplémentaires.

6. Procédé selon la revendication 5, comprenant en outre les étapes de :
détermination d'une taille de la partie d'affichage de panneau variable (116), la taille de la partie d'affichage de panneau variable (116) correspondant à un nombre maximum de panneaux affichables ;
comparaison de la taille déterminée à un nombre de panneaux présentés ; et
affichage du nombre maximum de panneaux affichables dans la partie d'affichage de panneau variable.

7. Procédé selon la revendication 6, comprenant en outre l'étape, lorsque le nombre de panneaux présentés est supérieur au nombre maximum de panneaux affichables, d'indication (162) que des panneaux supplémentaires sont cachés et peuvent être affichés.

8. Procédé selon la revendication 7, comprenant en outre l'étape d'indication des panneaux affichés dans la partie d'affichage de panneau variable (116).

9. Procédé selon la revendication 1, comprenant en outre l'étape d'accès à un serveur de données configuré pour stocker les informations associées au système de commande industriel et aux nœuds sélectionnables.

10. Procédé selon la revendication 1, comprenant en outre l'étape d'appel d'au moins l'un du premier panneau (120) et du panneau associé au nœud sélectionné, un serveur de données étant accédé pour récupérer des informations supplémentaires associées à l'au moins un du premier panneau et du panneau associé au nœud sélectionné.

11. Appareil d'affichage comprenant :
une interface (102) ayant une entrée et une sortie ; et
un processeur (108) couplé à l'interface ;
**caractérisé en ce que**
la sortie est configurée pour afficher un premier panneau (120) au niveau d'une partie d'affichage de panneau variable (116) d'un affichage (110), le premier panneau (120) ayant un ou plusieurs premiers nœuds sélectionnables (122, 124, 126) associés à un système de commande industriel et des informations associées au système de commande industriel, lorsque l'entrée reçoit une sélection d'un ou plusieurs des nœuds sélectionnables (122, 124, 126), le processeur étant configuré pour accéder à un serveur et présenter un panneau (130) associé au nœud sélectionné au niveau de la partie d'affichage de panneau variable, le panneau (130) comprenant un ou plusieurs deuxièmes nœuds sélectionnables et des informations associées au nœud sélectionné, le processeur étant en outre configuré pour ajuster une taille de la partie d'affichage de panneau variable (116) affichée via la sortie afin de pouvoir accueillir un certain nombre de panneaux, le processeur étant en outre configuré pour permettre une navigation entre les panneaux qui est indépendante des informations affichées au niveau d'une partie de travail de l'affichage.

12. Appareil d'affichage selon la revendication 11, le processeur étant en outre configuré pour présenter le premier panneau (120) et le panneau (130) associé au nœud sélectionné, adjacents l'un à l'autre, sur la partie d'affichage de panneau variable (116) via la sortie.

13. Appareil d'affichage selon la revendication 11, comprenant en outre une pluralité de panneaux supplémentaires (140) configurés pour afficher le nœud sélectionné et les informations qui lui sont associées.

14. Appareil d'affichage selon la revendication 13, le processeur (108) étant en outre configuré pour déterminer une taille de la partie d'affichage de panneau variable (116) correspondant à un nombre maximum de panneaux affichables, le processeur étant en outre configuré pour comparer la taille déterminée à un nombre de panneaux présentés et afficher le nombre maximum de panneaux affichables dans la partie d'affichage de panneau variable (116).

15. Appareil d'affichage selon la revendication 14, les informations associées au système de commande industriel comprenant au moins des données parmi des données d'état d'alarme du système de commande et des données de fonctionnement du système de commande.
